# EUROPÄISCHE PATENTANMELDUNG

(11) **EP 1 035 613 A1**
(43) Veröffentlichungstag der Anmeldung: **13.09.2000**
(21) Anmeldenummer: 00102730.9
(22) Anmeldetag: 10.02.2000
(51) Int. Cl.: H01M 10/40

(54) **Sekundäre Lithium-Ionen-Zelle**

(30) Priorität: 08.03.1999 DE 19910114
(71) Anmelder: NBT GmbH, 30419 Hannover (DE)
(72) Erfinder: Bäuerlein, Peter, Dr., 65520 Bad Camberg (DE); Herr, Rudolf, Dr., 65779 Kelkheim (DE); Oberhauser, Johanna, 65779 Kelkheim (DE)
(74) Vertreter: Kaiser, Dieter Ralf, Dipl.-Ing.

(57) **Zusammenfassung**

Die Erfindung betrifft eine sekundäre Lithium-Ionen-Zelle mit einem kohlenstoffhaltigen Anodenmaterial, einem lithiumhaltigen Kathodenmaterial und einem nichtwäßrigen Elektrolyt, die eine sehr gute Strombelastbarkeit besitzt, und die einen Elektrolyten enthält, der aus der 0,8 bis 1,3 mol/l enthaltenden Lösung eines Lithiumsalzes in einem organischen Lösemittelgemisch aus 15 bis 35 Vol.% Ethylencarbonat und 65 bis 85 Vol.% Ethyl-Methylcarbonat besteht.

## Beschreibung

Die Erfindung betrifft eine sekundäre Lithium-Ionen-Zelle mit einer hohen Strombelastbarkeit, mit einem kohlenstoffhaltigen Anodenmaterial, einem lithiumhaltigen Kathodenmaterial und einem nichtwäßrigen Elektrolyt.

Aus dem Dokument US-A 5,472,809 ist eine Lithium-Ionen-Zelle bekannt, bei der ein ternäres organisches Lösungsmittelgemisch bestehend aus 5 - 40 Vol.% Propylencarbonat (PC), 10 - 20 Vol.% Ethylencarbonat (EC) und 50 - 85 Vol.% Dimethylcarbonat (DMC) mit einem darin gelösten Lithium-Ionen enthaltenden Leitsalz als Elektrolyt eingesetzt wird. Als Leitsalze werden vorgeschlagen Lithiumhexafluoroarsenat (LiAsF₆), Lithiumhexafluorophosphat (LiPF₆), Lithiumtetrafluoroborat (LiBF₄), Lithiumperchlorat (LiClO₄), Lithiumtrifluoromethansulfat (LiCF₃SO₃), Lithium bis(trifluoromethansulfon)imid (LiN(CF₃SO₂)₂) oder Lithium tris(trifluoromethansulfon)methid (LiC(CF₃SO₂)₃) bzw. Mischungen daraus. Die vorbekannten Elektrolyte sollen vor allem die Entladefähigkeit von Lithium-Ionen-Zellen bei tiefen Temperaturen gewährleisten.

In dem Dokument EP-A 312236, welches als Elektrolyt für nichtwäßrige Zellen ein Lösungsmittelgemisch bestehend aus EC, PC und einem Polyethylenglycoldialkylether offenbart, wird als Vergleichsbeispiel ein Lösungsmittelgemisch bestehend aus 40 mol% PC, 40 mol% EC und 20 mol% DEC angegeben.

Im Hinblick auf die entnehmbare Kapazität aus Zellen, die die vorgenannten Elektrolyte enthalten bzw. auf deren Belastbarkeit, bestehen jedoch weiterhin Anforderungen nach Verbesserungen. Unter Belastbarkeit wird dabei die Entladung der Zellen mit höheren Stromstärken beziehungsweise Stromdichten verstanden.

In den letzten Jahren wurden bedeutende Fortschritte in der Batterietechnik erzielt. Insbesondere wurde durch die Entwicklung des elektrochemischen Systems der Lithium-Ionen-Zellen ein beträchtlicher Fortschritt hinsichtlich der speicherbaren Energiedichte bei Normaltemperatursystemen erzielt. Durch ihren hohen Energieinhalt sind Lithium-Ionen-Zellen besonders für solche Anwendungen interessant, bei denen hohe Leistungsanforderungen an den Energiespeicher bestehen. Die hohe mittlere Entladespannung von ca. 3,5 V gestattet es, schon bei Strömen, die 1C entsprechen, eine ausreichende Leistung zu entnehmen. Unter 1C wird dabei eine theoretische Stromstärke verstanden, mit der die Ladungsmenge der geladenen positiven Elektrode innerhalb einer Stunde vollständig entladen wird. Es besteht bei Elektrostraßenfahrzeugen und insbesondere bei Hybridfahrzeugen, die ihre Spitzenleistungsanforderung aus einer Batterie beziehen, ein Bedarf an Batterien, die ein geringes Gewicht besitzen und große Leistungen abgeben können. Es sind daher schon verschiedene Vorschläge gemacht worden, die Strombelastbarkeit der Lithium-Ionen-Zellen zu verbessern. Bekanntlich müssen bei mit hohen Strömen belastbaren Zellen die Elektroden eine große Oberfläche besitzen und werden deshalb als Dünnfilmelektroden ausgebildet, wobei in der Regel die Belastbarkeit der positiven Elektroden die Leistungsfähigkeit der Zellen limitiert.

Eine Methode zur Herstellung dünner Elektroden besteht darin, das elektrochemisch aktive Elektrodenmaterial sowie Leitmittelzusätze wie Leitruße und/oder Graphite mit pulverförmigen Bindemitteln wie Polytetrafluorethylen-(PTFE) oder Polyethylenpulvern (PE) zu mischen und auf dünne metallische Folien aufzuwalzen oder in Streckmetalle einzuwalzen. Die metallischen Trägerstrukturen dienen dabei gleichzeitig als Stromableiter. Weiterhin sind Pastierverfahren bekannt, bei denen die aktiven Elektrodenmaterialien und das Leitmittel in einer Lösung des Bindemittels dispergiert und als Paste auf die metallische Trägerstruktur aufgebracht sowie anschließend getrocknet werden. Die bekannten Pastierverfahren gestatten die Herstellung von Elektroden mit großen Oberflächen. Allerdings führen Binder mit elektrischen Isolationseigenschaften zu einem beträchtlichen Ansteigen der Überspannung und damit zu Verlusten beim Laden und Entladen der fertigen Zellen. Zur Lösung dieses Problems wurde bereits vorgeschlagen Polyvinylidendifluorid-haltige (PVdF) Bindemittel einzusetzen.

Spezielle Verbesserungen der Strombelastbarkeit von nichtwäßrigen Lithium-Ionen-Zellen sind aus dem Dokument US-A 5,714,279 bekannt. Den Elektroden soll danach ein Teil des im Elektrolyten verwendeten Leitsalzes in fein verteilter Form zugesetzt werden. Durch das Herauslösen des feinkristallinen Leitsalzes aus den Elektroden durch den Elektrolyten in der fertigen Zelle sollen zusätzliche Poren gebildet werden, die die Elektrodenoberfläche vergrößern und die Strombelastbarkeit der Zellen verbessern.

Die Erfindung hat sich die Aufgabe gestellt, eine sekundäre Lithium-Ionen-Zelle anzugeben, die trotz hoher Entladeströme eine geringe Abnahme der ihr entnehmbaren Kapazität besitzt.

Erfindungsgemäß wird die Aufgabe für die im Oberbegriff gattungsgemäß angegebene Zelle durch die kennzeichnenden Merkmale des Anspruchs 1 gelöst.

Weitere vorteilhafte Ausgestaltungen der Erfindung sind in den Ansprüchen 2 bis 5 dargelegt.

Wie anhand der nachfolgenden Beispiele sowie der Vergleichsbeispiele gezeigt wird, zeigen die Lithium-Ionen-Zellen mit dem erfindungsgemäßen Elektrolyten eine höhere Belastbarkeit auf, die sich in der höheren entnehmbaren Kapazität bei größeren Entladestromstärken zeigt. Es wurde gefunden, daß bei erfindungsgemäßen Lithium-Ionen-Zellen trotz Entladung mit 10C-Stromstärken, die entnehmbare Kapazität nicht unter einen Wert von ca. 80% der mit einer 1C-Entladung bestimmten Anfangskapazität sinkt. Unter 1C wird dabei die mittlere Stromstärke verstanden mit der eine Zelle innerhalb einer Stunde entladen wird.

Die Erfindung wird nachfolgend anhand von Beispielen und 2 Figuren sowie einer Tabelle näher dargestellt.

Es zeigen:
- Figur 1 -: den Vergleich der 10C-Entladekapazität im Spannungsbereich zwischen 4 und 2,5 V für Zellen mit der 1,0 molaren Lösung von LiPF₆ in 20 Vol.% EC und 80 Vol.% EMC (Kurve -○ -), der 1,0 molaren Lösung von LiPF₆ in 30 Vol.% EC und 70 Vol.% EMC (Kurve --) als Elektrolyten gegenüber Zellen mit dem bekannten Elektrolyten, der aus einer 1,0 molaren Lösung von LiPF₆ in 40 Vol.% EC, 40 Vol.% DMC, 20 Vol.% DEC besteht (Kurve -·-);
- Figur 2 -: den Vergleich der 10C-Entladekapazitäten in Abhängigkeit vom Leitsalzgehalt im Elektrolyten, der aus 20 Vol.% EC und 80 Vol.% EMC besteht (Kurve -#- 0,8 molar; Kurve -□- 1,0 molar; Kurve -△- 1,2 molar)

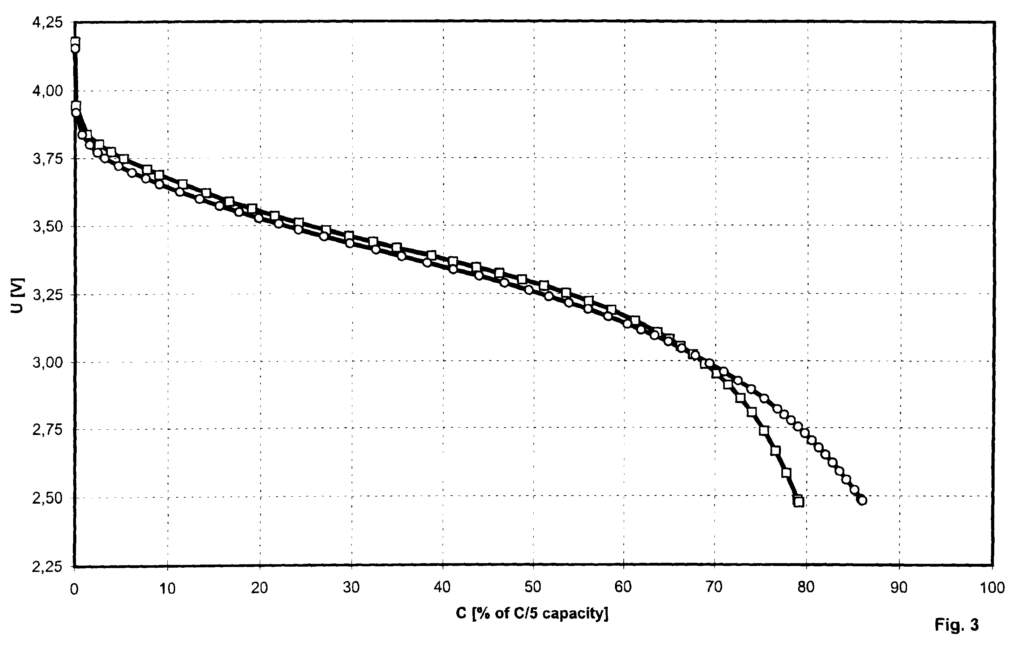

- Figur 3 -: den Vergleich der 10C-Entladekapazitäten mit einem Elektrolyten, der aus 20 Vol.% EC und 80 Vol.% EMC (Kurve -0- bzw. aus 20 Vol.% EC, 60 Vol.% EMC und 20 Vol.% DME besteht (Kurve -□-).

### Beispiel 1

Als Standardtestobjekt dienen aus unter Preßdruck stehenden Folien aufgebaute Druckflachzellen, in denen jeweils 10 cm² positive Elektrode, eine kohlenstoffhaltige negative Elektrode und zwei Lagen eines 50 µm dicken Polypropylen-Separators verwendet werden. Die Elektroden werden mit einem Druck von 50 N/cm² beaufschlagt. Als Elektrolyt dient eine 1 molare Lösung von Lithiumhexafluorophosphat (LiPF₆) in einem Lösungsmittelgemisch bestehend aus 20 Vol.% EC und 80 Vol.% EMC. Die in allen Beispielen verwendete negative Elektrode wird dadurch erhalten, daß 10 Gew.% eines Polyvinylidendifluorid-Hexafluoropropylen-Copolymers, welches 10 mol% Hexafluoropropylen im Copolymer enthält (PVdF-co-HFP-10) in N-Methylpyrrolidon (NMP) vollständig gelöst wird und darin 85 Gew.% eines kugelförmigen Graphitpulvers mit einer mittleren Korngröße (D₅₀) von 6 µm sowie 5 Gew.% eines Leitrußes dispergiert werden. Die homogene Paste wird auf eine ca. 10 µm dicke Kupferfolie in einer Schichtdicke aufgebracht, die einer Flächenbelegung von ca. 4 mg/cm² entspricht und anschließend getrocknet. Die so erhaltenen negativen Elektroden werden einheitlich in allen Beispielen verwendet.

Analog der Herstellung der negativen Elektroden werden zur Herstellung der positiven Elektroden 5 Gew.% PVdF-co-HFP-Polymer mit einem HFP-Anteil von 22 mol% (PVdF-co-HFP-22) in N-Methylpyrrolidon vollständig aufgelöst. In der Lösung des Bindemittels werden 5 Gew.% Leitruß sowie 10 Gew.% expandierter Graphit mit einem D₅₀ < 6 µm und 80 Gew.% eines Lithium-Mangan-Spinells mit einem D₅₀-Wert < 12 µm homogen dispergiert. Die so erhaltene Aktivmasse wird auf eine 20 µm dicke Aluminiumträgerfolie aufgebracht. Die Flächenbelegung beträgt ca. 10 mg/cm².

Die Zellen werden hinsichtlich ihrer Kapazität bei einer Belastung mit einer 10C-Stromstärke getestet.

### Beispiel 2

Gemäß Beispiel 1 werden Druckflachzellen hergestellt mit dem Unterschied, daß eine 1 molare Lösung von LiPF₆ in einem organischen Lösungsmittelgemisch bestehend aus 30 Vol.% EC und 70 Vol.% EMC verwendet wird.

### Vergleichsbeispiel 1

Analog Beispiel 1 hergestellte Zellen enthalten als Elektrolyt eine 1 molare Lösung von LiPF₆ in einem Lösungmittelgemisch bestehend aus 40 Vol.% EC, 40 Vol.% DMC und 20 Vol.% Diethylcarbonat (DEC).

### Beispiel 3

Analog Beispiel 1 werden Zellen hergestellt. Der Elektrolyt besteht jedoch aus einer 0,8 molaren Lösung von LiPF₆ in einem organischen Lösemittelgemisch bestehend aus 20 Vol.% EC und 80 Vol.% EMC.

### Beispiel 4

Analog Beispiel 3 werden Zellen hergestellt. Der Elektrolyt besteht jedoch aus einer 1,2 molaren Lösung von LiPF₆ in einem organischen Lösemittelgemisch bestehend aus 20 Vol.% EC und 80 Vol.% EMC.

### Beispiel 5

Analog Beispiel 3 werden Zellen hergestellt mit dem Unterschied, daß als Elektrolyt eine 1,4 molaren Lösung von LiPF₆ in einem organischen Lösemittelgemisch bestehend aus 30 Vol.% EC und 70 Vol.% EMC verwendet wird.

### Beispiel 6

Gemäß Beispiel 1 werden Druckflachzellen hergestellt mit dem Unterschied, daß eine 1 molare Lösung von LiPF₆ in einem organischen Lösungsmittelgemisch bestehend aus 20 Vol.% EC und 60 Vol.% EMC und 20 Vol.% DME verwendet wird.

**Tabelle 1**

| Beispiel Nr. | EC-Gehalt [%] | LiPF₆-Konz. [mol/L] | 1C Kapazität [mAh/g pos. Masse] | 10C Kapazität [mAh/g pos.Masse] | 10C Kapazität [% der 1C Kap.] |
|---|---|---|---|---|---|
| 1 | 20 | 1.0 | 75.1 | 61.9 | 82 |
| 2 | 30 | 1.0 | 75.5 | 57.2 | 76 |
| | | | | | |
| 3 | 20 | 0.8 | 72.6 | 50.8 | 70 |
| 4 | 20 | 1.2 | 73.6 | 54.8 | 74 |
| 5 | 20 | 1.4 | 73.3 | 51.4 | 70 |
| 6 | 20 | 1,0 | 67,0 | 57,6 | 86 |
| V1 | 40 | 1.0 | 77.2 | 55.7 | 72 |

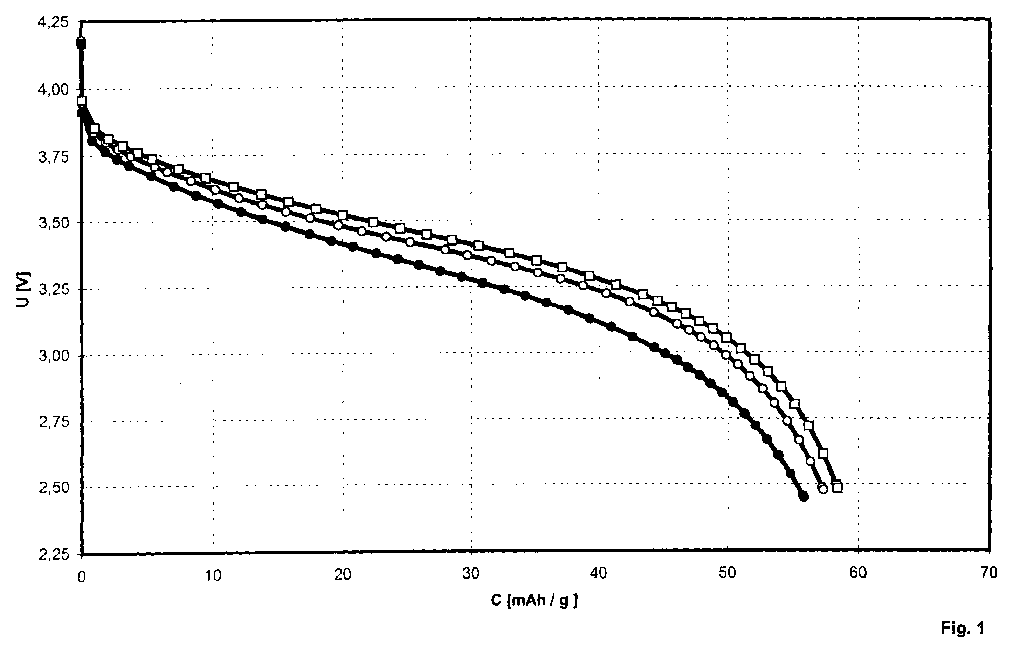

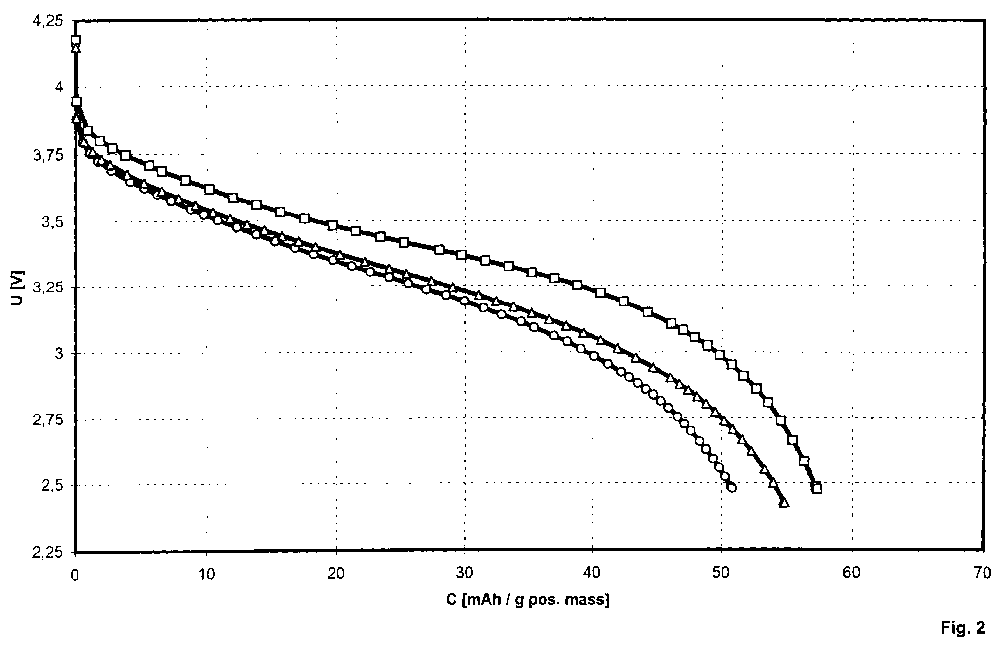

Die Figuren 1 und 2 zeigen die größere Belastbarkeit ausgedrückt in der größeren entnehmbaren Kapazität und der verbesserten Spannungslage der erfindungsgemäßen Zellen gegenüber der Vergleichszelle mit einem bekannten Standardelektrolyten. In Tabelle 1 sind die absolut entnehmbaren Kapazitäten und die relativ zur 1C-Kapazität entnehmbaren Kapazitäten nach den erfindungsgemäßen Beispielen und den Vergleichsbeispielen enthalten.

## Patentansprüche

1. Sekundäre Lithium-Ionen-Zelle mit einem kohlenstoffhaltigen Anodenmaterial, einem lithiumhaltigen Kathodenmaterial und einem nichtwäßrigen Elektrolyt, dadurch gekennzeichnet, daß der Elektrolyt aus der 0,8 bis 1,3 mol/l enthaltenden Lösung eines Lithiumsalzes in einem organischen Lösemittelgemisch besteht, welches
15 bis 35 Vol.% Ethylencarbonat und
65 bis 85 Vol.% Ethyl-Methylcarbonat
enthält.

2. Sekundäre Lithium-Ionen-Zelle nach Anspruch 1, dadurch gekennzeichnet, daß der Ethylencarbonat-Gehalt im Lösemittelgemisch
20 bis 30 Vol.% und der Lithiumsalzgehalt 1,15 bis 1,25 mol/l
beträgt.

3. Sekundäre Lithium-Ionen-Zelle nach Anspruch 1 oder Anspruch 2, dadurch gekennzeichnet, daß 20 bis 30 Vol.% des Ethyl-Methylcarbonat-Anteils am Elektrolyten durch Dimethoxyethan ersetzt ist.

4. Sekundäre Lithium-Ionen-Zelle nach einem oder mehreren der Ansprüche 1 bis 3, dadurch gekennzeichnet, daß das lithiumhaltige Kathodenmaterial auf eine Aluminiumfolie pastiert ist.

5. Sekundäre Lithium-Ionen-Zelle nach Anspruch 4, dadurch gekennzeichnet, daß das lithiumhaltige Kathodenmaterial ein Lithium-Kobalt- oder Lithium-Nickel-Kobalt-Mischoxid oder ein Lithium-Mangan-Spinell ist.
